# EUROPÄISCHE PATENTSCHRIFT

(11) **EP 0 708 005 B1**
(45) Veröffentlichungstag und Bekanntmachung des Hinweises auf die Patenterteilung: **25.11.1998**
(21) Anmeldenummer: 95112272.0
(22) Anmeldetag: 04.08.1995
(51) Int. Cl.: B60T 7/04

(54) **Bremsdruckstange**
Connecting push bar for a brake device
Tige de pression pour un dispositif de freinage

(30) Priorität: 21.10.1994 DE 4437658
(43) Veröffentlichungstag der Anmeldung: 24.04.1996
(73) Patentinhaber: Dr.Ing.h.c. F. Porsche Aktiengesellschaft, 70435 Stuttgart (DE)
(72) Erfinder: Baumann, Hans-Uwe, D-70437 Stuttgart (DE)

(56) Entgegenhaltungen:
- EP-A- 0 229 350
- EP-B- 0 121 114

## Beschreibung

Die Erfindung bezieht sich auf eine Bremsdruckstange nach dem Oberbegriff des Anspruchs 1.

Aus der EP 0 121 114 B 1 ist eine Bremsdruckstange bekannt, die aus zwei Zapfen und einer verbindenden Hülse besteht, in der die beiden Zapfen jeweils mit einem Ende gehalten sind. An dem dem Pedal zugerichteten Ende des einen Zapfens ist eine gabelförmige Aufnahme für das Pedal vorgesehen.

Aufgabe der Erfindung ist es, eine Bremsdruckstange zu schaffen, die eine sichere Verbindung zwischen Pedal und Bremsgerät herstellt und die einfach montierbar und herstellbar ist.

Diese Aufgabe wird erfindungsgemäß durch die kennzeichnenden Merkmale des Anspruchs 1 gelöst. Weitere vorteilhatte Merkmale beinhalten die Unteransprüche.

Die mit der Erfindung hauptsächlich erzielten Vorteile bestehen darin, daß die Bremsdruckstange einfach und preiswert aus einem Strangpreßprofil mit querverlaufenden Rippen und Durchbrüchen, beispielsweise durch eine Ablängung von einem Strang herstellbar ist.

Diese Druckstange ist vorzugsweise so gestaltet, daß an den freien Enden sowohl eine gabelförmige Lagerung für das Pedal als auch eine Zapfenaufnahme für ein Bremsgerät angeformt ist. Darüber hinaus sind an der Außenseite der Druckstange, die ansonsten glattflächig ausgeführt ist, Anformungen in Form von Nuten vorgesehen, die zur Halterung von einem Abdichtbalg dienen.

Zur Aufnahme des Pedals in der gabelförmigen Lagerung ist diese breiter ausgeführt als der Schaft der Druckstange. Insbesondere verbreitert sich der Schaft von einem Bereich der Druckstange bis zum Gabelkopf hin.

Es ist zwischen Druckstange und Bremsgerät ein Verschluß vorgesehen, der eine unkomplizierte und schnelle Verbindung zwischen diesen Bauteilen gewährleistet. Hierzu ist das Bremsgerät mit einem im Durchmesser kleineren Zapfen versehen, der in eine Aufnahmebohrung einer Rippe in der Druckstange eingesteckt und über ein Sicherungsblech an der Rippe gehalten wird. Das Sicherungsblech rastet in einer Nut des Zapfens ein und die Druckstange stützt sich hierdurch an der Rippe ab.

Die Druckstange besteht aus einer Leichtmetallegierung und weist eine Sollknickstelle auf und ist als Crash-Sicherheitsdruckstange ausgelegt. Hierzu ist in einem Bereich hinter dem Gabelkopf eine Zone mit der Sollknickstelle vorgesehen. Diese ist beispielsweise in einer Rippe als abgeknickter Bereich angeordnet. Diese Sollknickstelle ist konstruktiv so über die Auslagerungsfestigkeit des Werkstoffs ausgelegt, daß ab einer bestimmten Kraft ein definiertes Versagen stattfinden kann. Die Sollknickstelle wird angesprochen, wenn der Fahrer auf dem Pedal steht und bei einem Crash eine große Kraft eingeleitet wird. Desweiteren wird bei ertremstem Mißbrauch die Bremsdruckstange in der Sollknickstelle verformt. Die Verformung der Druckstange ist immer so ausgelegt, daß auch mit verformter Stange noch bedingt gebremst werden kann.

Insbesondere wird die Sollknickstelle bei der Kombination von einem Pedal aus einem Kunststoff und einer Druckstange aus einer Leichtmetallegierung, insbesondere einer Aluminiumlegierung vorgesehen, da hierdurch das schwächste Glied in der Kette vom Pedal auf die metallische Druckstange verlagert wird.

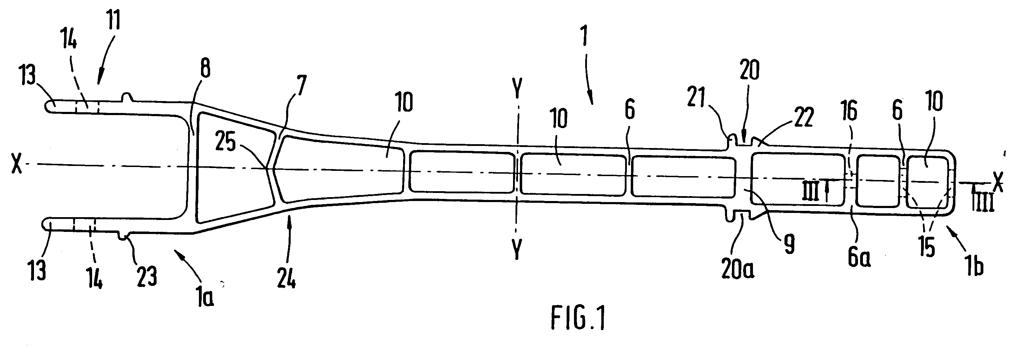

Ein Ausführungsbeispiel der Erfindung ist in der Zeichnung dargestellt und wird im folgenden näher beschrieben.
Es zeigen
- Fig. 1: eine Draufsicht auf eine Bremsdruckstange,

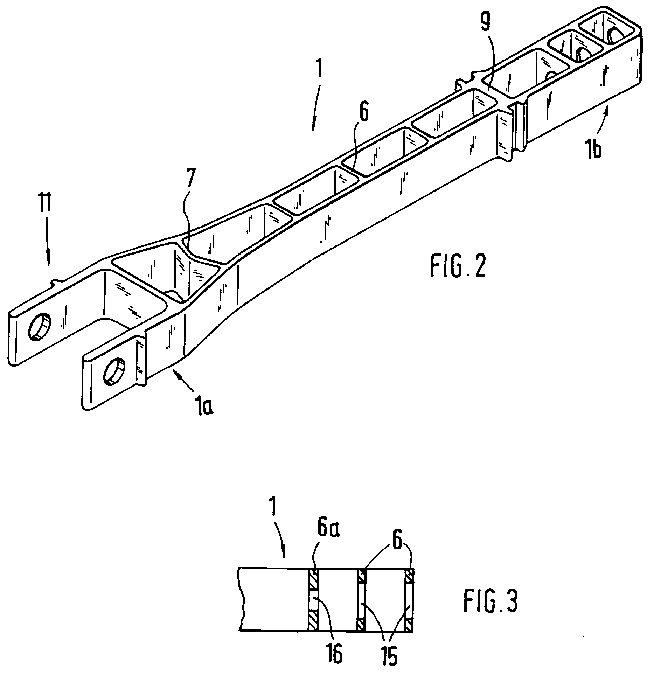

- Fig. 2: eine schaubildliche Darstellung der Bremsdruckstange,

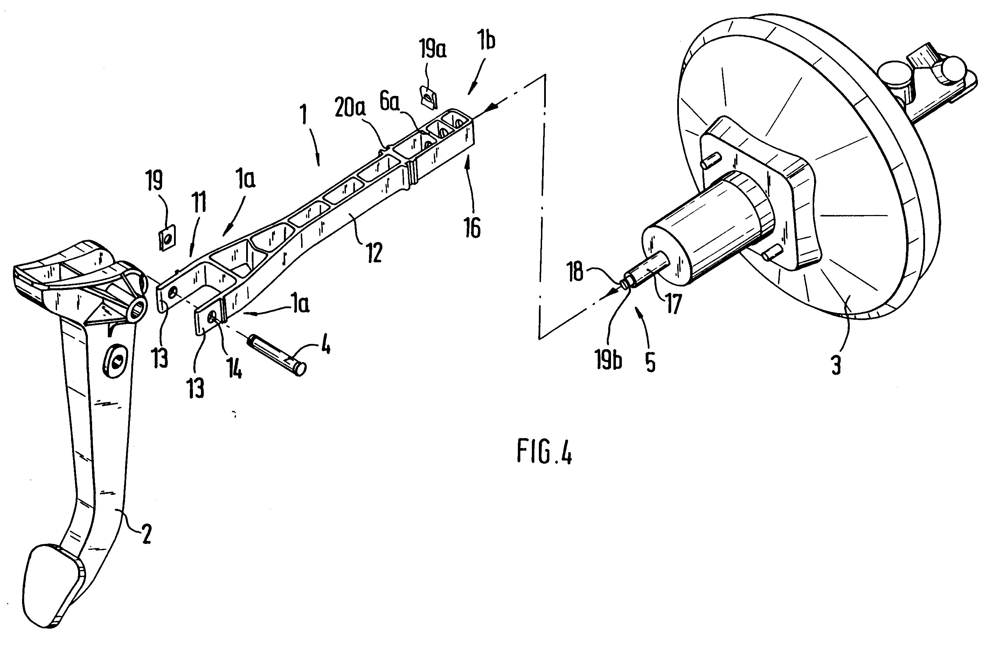

- Fig. 3: einen Schnitt nach der Linie III-III der Fig. 1 durch eine Aufnahme der Bremsdruckstange,
- Fig. 4: eine schaubildliche Darstellung der Anordnung der Bremsdruckstange zwischen einem Pedal und einem Bremsgerät mit Lagerungs- und Befestigungsmitteln,

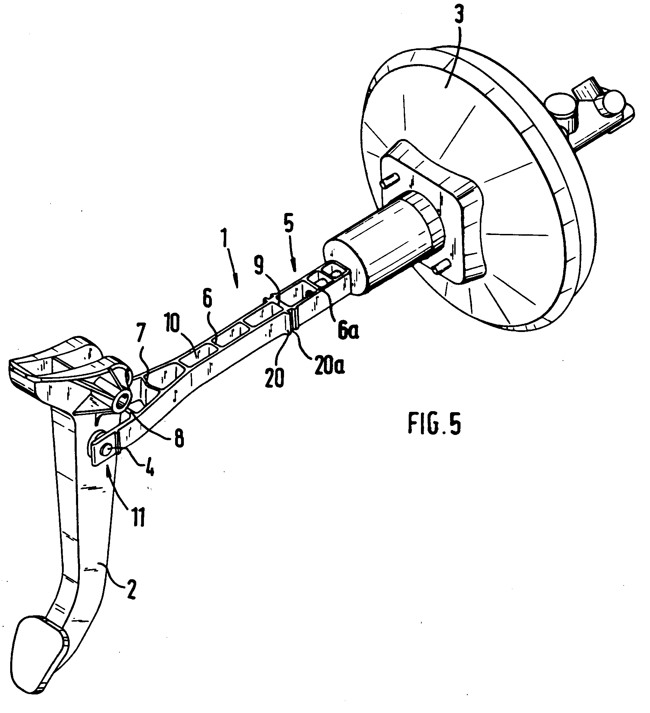

- Fig. 5: eine zusammengebaute Baueinheit, bestehend aus Pedal, Bremsdruckstange und Bremsgerät.
Eine Bremsdruckstange 1 ist zwischen einem Pedal 2 und einem Bremsgerät 3 angeordnet und mit dem Pedal 2 über einen Zapfen 4 und mit dem Bremsgerät 3 über eine Schnellverschlußeinrichtung 5 verbunden.

Die Bremsdruckstange 1 besteht vorzugsweise aus einer Leichtmetallegierung, kann aber auch aus einem Kunststoff bestehen. In der Leichtmetallausführung ist die Druckstange 1 als Strangpreßprofil ausgeführt und weist querverlaufende parallele Rippen 6, 6a, 7, 8 und 9 mit zwischenliegenden Durchbrüchen 10 auf.

Das Pedal 2 ist in einem Gabelkopf 11 über den Verbindungszapfen 4 schwenkbar gehalten. Der Gabelkopf 11 erweitert sich kontinuierlich gegenüber dem Schaft 12 der Druckstange 1 und weist an einem Ende 1a zwei Schenkel 13 mit jeweils einer Aufnahmebohrung 14 auf.

Die Verbindung der Druckstange 1 mit dem Bremsgerät 3 erfolgt über den Schnellverschluß 5. Dieser umfasst im wesentlichen eine Gerätestange 17 und am Ende 1b Durchsteckbohrungen 15 in den Rippen 6 sowie eine Befestigungsbohrung 16 geringeren Durchmessers in der weiteren Rippe 6a. Am Bremsgerät 3 ist die Gerätestange 17 befestigt, die einen im Durchmesser kleineren Verbindungszapfen 18 mit einer Ringnut 19b aufweist. Der Zapfen 18 ist in der Bohrung 16 angeordnet und über ein Sicherungsblech 19a, das in die Ringnut 19b eingreift und den Zapfen 18 zur Rippe 6a hin abstützt und festsetzt. Dieser Verbindungszapfen 18 kann zum Toleranzausgleich bzw. zum Einstellen auch verstellbar, beispielsweise über ein Gewinde in der Stange 17 gehalten sein.

Die Druckstange 1 wird aus einem Strangpreßprofil durch Ablängung von einem langen Profilstück erzielt. Sie ist außenseitig bis auf eine nutförmige Aufnahme 20 für einen Abdichtbalg glattflächig ausgeführt. Diese Aufnahme 20 umfasst zwei außenseitige Stege 21 und 22, wobei der eine Steg 22 eine schräge Montagefläche besitzt. An den Schenkeln 13 des Gabelkopfes 11 sind außenseitig Verstärkungsstege 23 angeordnet.

Die Bremsdruckstange 1 weist im Schaft 12 im Bereich des Gabelkopfes 11 mindestens eine Sollknickstelle 24 auf. Diese wird durch eine unter einem stumpfen Winkel leicht geknickte Rippe 7 gebildet. Die Knickung unter dem stumpfen Winkel weist eine Knickspitze 25 auf, die zum Gabelkopf 11 hinweist. Diese Sollknickstelle 24 ist in einer Rippe 7 angeordnet, die der Rippe 8 des Gabelkopfes 11 unmittelbar benachbart ist.

Die Sollknickstelle 24 ist bei einer Bremsdruckstange 1 aus einer Leichtmetallegierung und einem Pedal 2 aus Kunststoff erforderlich, damit bei unzulässig hohen Kräften nicht das Pedal 2 sondern die Bremsdruckstange 1 beschädigt wird.

Die Bremsdruckstange 1 ist bei einem hängenden Bremspedal 2 in der Weise angeordnet, daß die Durchbrüche in einer senkrechten Ebene X-X verlaufen und die Rippen 6, 6a, 7, 8 und 9 in einer Querebene Y-Y dazu.

## Patentansprüche

1. Bremsdruckstange (1) zum Betätigen einer Fahrzeugbremse, die zwischen einem Pedal (2) und einem Bremsgerät (3) angeordnet ist, **dadurch gekennzeichnet**, daß die Bremsdruckstange (1) aus einem Strangpreßprofil mit Durchbrüchen (10) besteht und an einem Ende (1a) eine Lagerung (4, 14) für das Pedal (2) und am abgekehrten Ende (1b) eine Aufnahmebohrung (15, 16) für eine Stange (17, 18) des Bremsgerätes (3) aufweist.

2. Bremsdruckstange nach Anspruch 1, **dadurch gekennzeichnet**, daß die Druckstange (1) parallel verlaufende Rippen (6, 6a, 7, 8 und 9) aufweist, zwischen denen die Durchbrüche (10) gebildet sind, wobei mindestens drei Rippen (6 und 6a) am abgekehrten Ende (1b) die Bohrungen (15, 16) zur Aufnahme der Gerätestange (17, 18) aufnehmen.

3. Bremsdruckstange nach den Ansprüchen 1 oder 2, **dadurch gekennzeichnet**, daß die Lagerung für das Pedal (2) aus einem Gabelkopf (11) besteht, der das Pedal (2) von außen umfassende Schenkel (13) aufweist, in denen die Aufnahmebohrungen (14) für den Lagerzapfen (4) angeordnet sind.

4. Bremsdruckstange nach Anspruch 1 oder einem der vorhergehenden Ansprüche, **dadurch gekennzeichnet**, daß der Gabelkopf (11) gegenüber einem Schaft (12) der Druckstange (1) eine größere Breite aufweist und die Außenkontur der Stange (1) etwa ab einem mittleren Bereich eine kontinuierliche Erweiterung zum Gabelkopf (11) hin besitzt.

5. Bremsdruckstange nach Anspruch 1 oder einem der vorhergehenden Ansprüche, **dadurch gekennzeichnet**, daß im Bereich der Rippe (9) die Druckstange (1) außenseitig vorstehend angeformte Aufnahmen (20) mit zwischen Stegen (21, 22) ausgeführten Nuten (20a) aufweist, die in Richtung der Durchbrüche (10) verlaufen und einen Abdichtbalg halten.

6. Bremsdruckstange nach Anspruch 5, **dadurch gekennzeichnet**, daß ein Steg (22) der Aufnahme (20) eine Anschrägung aufweist.

7. Bremsdruckstange nach Anspruch 1 oder einem der vorhergehenden Ansprüche, **dadurch gekennzeichnet**, daß die Bremsdruckstange (1) mindestens eine Zone mit einer Sollknickstelle (24) aufweist, die aus einer mit einer Knickstelle versehenen Rippe (7) besteht, wobei eine gebildete Knickspitze (25) dem Gabelkopf (11) zugerichtet ist.

8. Bremsdruckstange nach Anspruch 1 oder einem der vorhergehenden Ansprüche, **dadurch gekennzeichnet**, daß die Sollknickstelle (24) in einer zur Rippe (8) des Gabelkopfes (11) benachbarten Rippe (7) angeordnet ist.

9. Bremsdruckstange zum Betätigen einer Fahrzeugbremse, die zwischen einem Pedal und einem Bremsgerät angeordnet ist, **dadurch gekennzeichnet**, daß die Bremsdruckstange (1) aus einem Strangpreßprofil mit Durchbrüchen (10) besteht und an einem Ende (1a) eine Lagerung (4, 14) für das Pedal (2) und am abgekehrten Ende (1b) eine Aufnahme (15, 16) für eine Stange (17, 18) des Bremsgerätes aufweist und die Bremsdruckstange aus einer Leichtmetallegierung besteht und mit einem Pedal (2) aus einem Kunststoff verbunden ist und zur Erzielung einer Sollknickstelle (24) in der Druckstange (1) diese eine Zone geringerer Belastbarkeit aufweist.

10. Verfahren zum Herstellen einer Druckstange für ein Kraftfahrzeug, **dadurch gekennzeichnet**, daß die Druckstange (1) aus einem Strangpreßprofil definierter Breite besteht und durch Ablängung aus einem Strangpreßprofil großer Länge herstellbar ist und zwischen durchgehenden Außenwänden querverlaufende Rippen (6) mit zwischenliegenden Durchbrüchen (10) polygonalen Querschnitts aufweist.

## Claims

1. A brake push rod (1) for actuating a vehicle brake, which is arranged between a pedal (2) and a brake servo unit (3), **characterized in that** the brake push rod (1) comprises an extruded section with apertures (10) and a mounting (4, 14) for the pedal (2) at one end (1a) and a receiving bore (15, 16) for a rod (17, 18) of the brake servo unit (3) at the further end (1b).

2. A brake push rod according to Claim 1, **characterized in that** the push rod (1) comprises ribs (6, 6a, 7, 8 and 9) which extend parallel and between which the apertures (10) are formed, wherein at least three ribs (6 and 6a) at the further end (1b) receive the bores (15, 16) for receiving the servo-unit rod (17, 18).

3. A brake push rod according to Claim 1 or 2, **characterized in that** the mounting for the pedal (2) comprises a forked head (11) comprising arms (13) which embrace the pedal (2) from outside and in which the receiving bores (14) for the bearing journal (4) are arranged.

4. A brake push rod according to Claim 1 or one of the preceding Claims, **characterized in that** the forked head (11) has a greater width than a shaft (12) of the push rod (1), and the external contour of the rod (1) has a continuous enlargement towards the forked head (11) substantially from a central region.

5. A brake push rod according to Claim 1 or one of the preceding Claims, **characterized in that** in the region of the rib (9) the push rod (1) is provided on the outside with integrally formed projecting receiving means (20) with grooves (20a) which are formed between webs (21, 22) and which extend in the direction of the apertures (10) and retain a sealing gaiter.

6. A brake push rod according to Claim 5, **characterized in that** one web (22) of the receiving means (20) has a sloping portion.

7. A brake push rod according to Claim 1 or one of the preceding Claims, **characterized in that** the brake push rod (1) has at least one zone with a nominal buckling point (24) which comprises a rib (7) provided with a buckling point, wherein a formed buckling tip (25) faces the forked head (11).

8. A brake push rod according to Claim 1 or one of the preceding Claims, **characterized in that** the nominal buckling point (24) is arranged in a rib (7) adjacent to the rib (8) of the forked head (11).

9. A brake push rod for actuating a vehicle brake, which is arranged between a pedal and a brake servo unit, **characterized in that** the brake push rod (1) comprises an extruded section with apertures (10) and a mounting (4, 14) for the pedal (2) at one end (1a) and a receiving means (15, 16) for a rod (17, 18) of the brake servo unit at the further end (1b), and the brake push rod consists of a light-metal alloy and is connected to a pedal (2) of a plastics material and, in order to produce a nominal buckling point (24) in the brake push rod (1), the latter has a zone of lower load capacity.

10. A method of producing a push rod for a motor vehicle, **characterized in that** the push rod (1) comprises an extruded section of defined width and can be produced by being cut into length from an extruded section of large length and comprises ribs (6) extending transversely between continuous outer walls and having apertures (10) of polygonal cross-section interposed between the said ribs (6).

## Revendications

1. Tige de compression de frein (1) pour l'actionnement d'un frein de véhicule, qui est disposée entre une pédale (2) et un dispositif de freinage (3), caractérisée en ce que la tige de compression de frein (1) est réalisée dans un profilé extrudé avec ajours (10) et présente, à une extrémité (1a), un support (14) pour la pédale (2) et à l'extrémité (1b) opposée, un perçage formant logement (15, 16) pour une tige (17, 18) du dispositif de freinage (3).

2. Tige de compression de frein selon la revendication 1, caractérisée en ce que la tige de compression (1) présente des nervures (6, 6a, 7, 8 et 9) parallèles, entre lesquelles sont formés les ajours (10), trois nervures (6 et 6a) au moins recevant à l'extrémité (1b) opposée les perçages (15, 16) destiné à loger la tige de dispositif (17, 18).

3. Tige de compression de frein selon les revendications 1 ou 2, caractérisée en ce que le support de la pédale (2) est constitué d'une tête de fourche (11), qui comporte des branches (13) entourant la pédale (2) de l'extérieur, dans lesquelles sont disposés les perçages formant logement (14) pour la goupille (4).

4. Tige de compression de frein selon la revendication 1 ou l'une des revendications précédentes, caractérisée en ce que la tête de fourche (11) présente une plus grande largeur qu'un fût (12) de la tige de compression (1) et le contour extérieur de la tige (1) présente un élargissement continu à partir d'une zone centrale, vers la tête de fourche (11).

5. Tige de compression de frein selon la revendication 1 ou l'une des revendications précédentes, caractérisée en ce que dans la zone de la nervure (9), la tige de compression (1) présente extérieurement des logements (20) formés dépassants avec des rainures (20a), réalisées entre des filets (21, 22), qui s'étendent en direction des ajours (10) et qui maintiennent un soufflet d'étanchéité.

6. Tige de compression de frein selon la revendication 5, caractérisée en ce qu'un filet (22) du logement (20) présente un chanfrein.

7. Tige de compression de frein selon la revendication 1 ou l'une des revendications précédentes, caractérisée en ce que la tige de compression de frein (1) présente au moins une zone avec un point de pliage (24), qui est constituée d'une nervure (7) pourvue d'un point de pliage, une pointe de pliage (25) formée étant orientée vers la tête de fourche (11).

8. Tige de pression de frein selon la revendication 1 ou l'une des revendications précédentes, caractérisée en ce que le point de pliage (24) est disposé dans une nervure (7) voisine de la nervure (8) de la tête de fourche (11).

9. Tige de compression de frein destinée à actionner un frein de véhicule, qui est disposée entre une pédale et un dispositif de freinage, caractérisée en ce que la tige de compression de frein (1) est réalisée dans un profilé extrudé avec ajours (10) et présente, à une extrémité (1a), un support (4, 14) pour la pédale (2) et à l'extrémité (1b) opposée, un perçage formant logement (15, 16) pour une tige (17, 18) du dispositif de freinage et la tige de compression de frein est faite d'un alliage de métaux légers et est reliée à une pédale en matière plastique et, pour obtenir un point de pliage (24) dans la tige de compression (1), celle-ci présente une zone de moindre résistance.

10. Procédé de fabrication d'une tige de compression pour un véhicule automobile, caractérisé en ce que la tige de compression (1) est réalisée dans un profilé extrudé de largeur définie et peut être fabriquée par mise à longueur d'un profilé extrudé de grande longueur et présente des nervures (6), s'étendant transversalement entre des parois extérieures continues, avec des ajours (10) intercalés de section polygonale.
